(19) Europäisches Patentamt / European Patent Office / Office européen des brevets

(11) **EP 3 485 396 B1**

(12) **EUROPEAN PATENT SPECIFICATION**

(45) Date of publication and mention
of the grant of the patent:
**01.01.2020 Bulletin 2020/01**

(51) Int Cl.:
***G06F 16/583*** (2019.01)

(21) Application number: **17749246.9**

(86) International application number:
**PCT/US2017/042235**

(22) Date of filing: **14.07.2017**

(87) International publication number:
**WO 2018/013982 (18.01.2018 Gazette 2018/03)**

(54) **CLASSIFYING IMAGES USING MACHINE LEARNING MODELS**

KLASSIFIZIERUNG VON BILDERN UNTER VERWENDUNG VON MASCHINENLERNMODELLEN

CLASSIFICATION D'IMAGES À L'AIDE DE MODÈLES D'APPRENTISSAGE MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2016 US 201662362488 P**

(43) Date of publication of application:
**22.05.2019 Bulletin 2019/21**

(73) Proprietor: **Google LLC**
**Mountain View, CA 94043 (US)**

(72) Inventor: **CHOLLET, Francois**
**Mountain View**
**California 94043 (US)**

(74) Representative: **Kennedy, Richard E. et al**
**Venner Shipley LLP**
**5 Stirling House**
**Stirling Road**
**The Surrey Research Park**
**Guildford GU2 7RF (GB)**

(56) References cited:
**WO-A1-2016/100717     US-A1- 2015 178 383
US-B1- 9 141 916**

**Description**

BACKGROUND

This specification relates to processing images using machine learning models.

Image classification systems can identify objects in images, i.e., classify input images as including objects from one or more object categories. Some image classification systems use one or more machine learning models, e.g., deep neural networks, to classify an input image.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output. WO 2016/100717 A1 - relates to generating numeric embedding of images using machine learning model and it is concerned with one object category. US2015/0178383 - relates to classifying data objects based on machine learning and a respective score of a plurality of categories.

SUMMARY

The object of the invention is solved by the features of the independent claims. Further embodiments are the subject-matter of the dependent claims. This specification describes how a system implemented as computer programs on one or more computers in one or more locations can train a machine learning model and, once trained, use the trained machine learning model to classify received images.

Particular embodiments of the subject matter described in this specification can be implemented so as to realize one or more of the following advantages. The image classification system described in this specification can effectively perform multi-label, massively multi-category image classification, where the number of classes is large (many thousands or tens of thousands) and where each image typically belongs to multiple categories that should all be properly identified. In particular, by generating numeric embeddings of object categories as described in this specification and classifying images using these embeddings, the image classification system is able to accurately classify input images even when the images include objects belonging to multiple object classes. In particular, by exploiting the internal structure of the category space to generate the embeddings based on category co-occurrences, gains in one or more of training speed, precision, or recall of the machine learning model that is used by the classification system can be achieved.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

    FIG. 1 is a block diagram of an example of an image classification system.
    FIG. 2 is a flow diagram of an example process for training a machine learning model to classify images.
    FIG. 3 is a flow diagram of an example process for classifying a new image using a trained machine learning model.

Like reference numbers and designations in the various drawings indicate like elements.

DETAIL DESCRIPTION

This specification describes how a system implemented as computer programs on one or more computers in one or more locations can determine numeric embeddings of object categories in an embedding space, use the numeric embeddings to train a machine learning model to classify images, and, once trained, use the trained machine learning model to classify received images.

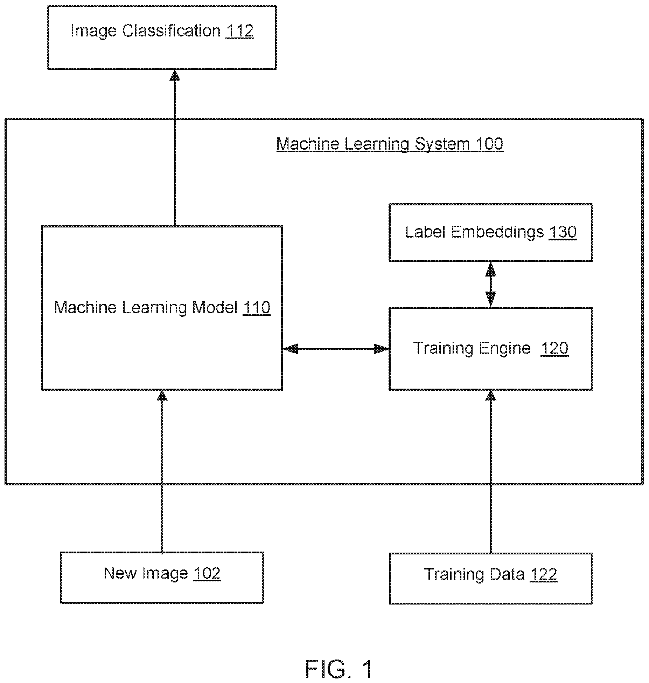

FIG. 1 shows an example image classification system 100. The image classification system 100 is an example of a system implemented as computer programs on one or more computers in one or more locations in which the systems, components, and techniques described below are implemented.

The image classification system 100 uses a machine learning model 110 and label embedding data 130 to classify received images. For example, the image classification system 100 can receive a new image 102 and classify the new image 102 to generate image classification data 112 that identifies one or more object categories from a predetermined set of object categories to which one or more objects depicted in the new image 102 belong. Once generated, the system 100 can store the image classification data 112 in association with the new image 102 in a data store, provide the image classification data 112 as input to another system for further processing, or transmit the image classification data 112 to a user of the system, e.g., transmit the image classification data 112 over a data communication network to a user device from which the new image 102 was received.

In particular, the label embedding data 130 is maintained by the image classification system 100, e.g., in one or more databases, and is data that maps each object category in the set of object categories to a respective numeric embedding of the object category in an embedding space. The embedding space is a *k*-dimensional space of numeric values, e.g., floating point values or quantized floating point values. Generally, *k* is a fixed integer value, e.g., a value on the order of one thousand or more. For example, in some cases, k may be equal to 4096 and each point in the embedding space is therefore a 4096-dimensional point.

The machine learning model 100 is a model, e.g., a deep convolutional neural network, that is configured to process input images to generate, for each input image, a predicted point in the embedding space, i.e., a *k*-dimensional point.

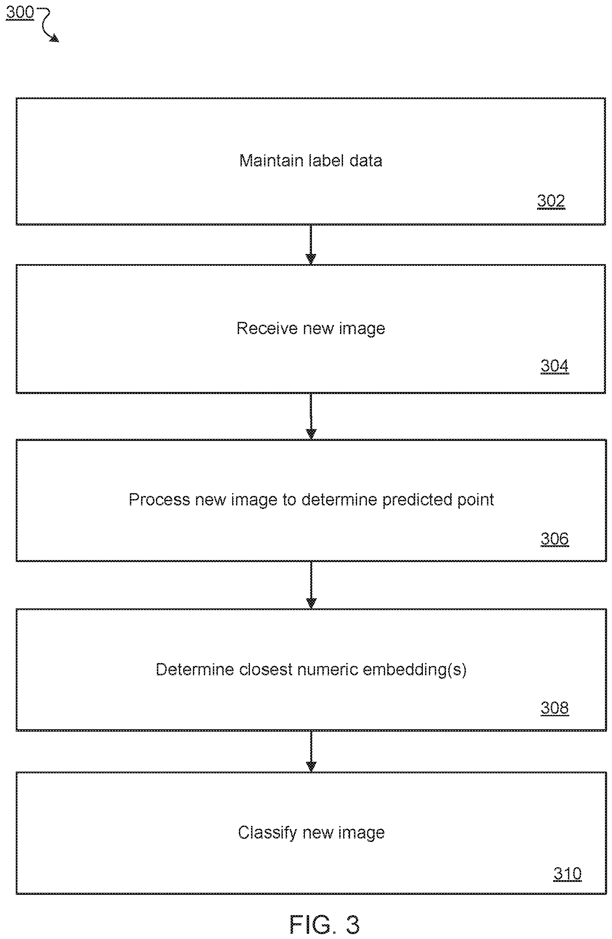

To classify the new image 102, the system 100 processes the new image 102 using the machine learning model 110 to generate a predicted point in the embedding space for the new image. The system 100 then determines one or more numeric embeddings that are closest to the predicted point from among the numeric embeddings in the label embedding data 102 and classifies the new image 102 as including images of one or more objects that belong to the object categories represented by the one or more closest numeric embeddings. Classifying new images is described in more detail below with reference to FIG. 3.

To allow the model 110 to be used to effectively classify input images, the system 100 include a training engine 120 that receives training data 122 and uses the training data 122 to generate the numeric embeddings of the object categories and to train the machine learning model 110.

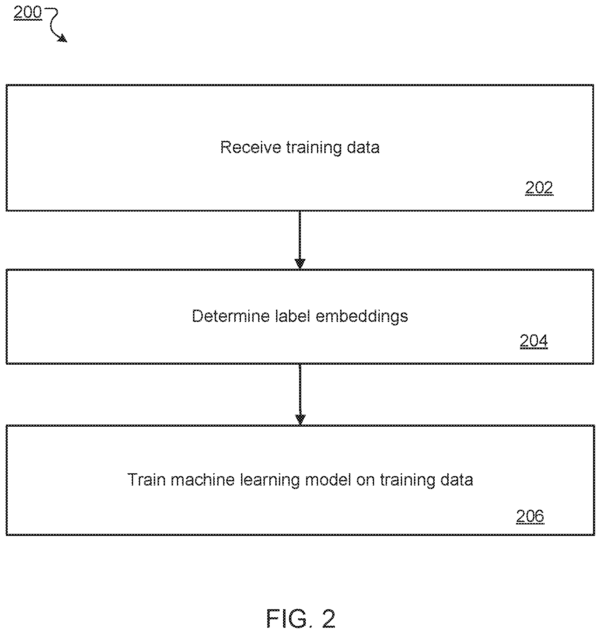

Generally, the training engine 120 generates the numeric embeddings such that a distance in the embedding space between the numeric embeddings for any two object categories reflects a degree of visual co-occurrence of the two object categories in images and then uses the generated embeddings to train the machine learning model 110. Generating numeric embeddings and training a machine learning model is described in more detail below with reference to FIG. 2.

FIG. 2 is a flow diagram of an example process 200 for training a machine learning model to classify images.

For convenience, the process 200 will be described as being performed by a system of one or more computers located in one or more locations. For example, an image classification system, e.g., the image classification system 100 of FIG. 1, appropriately programmed in accordance with this specification, can perform the process 200.

The system receives training data for training a machine learning model to classify images (step 202).

As described above, the machine learning model is a model, e.g., a deep convolutional neural network, that is configured to receive an input image and to process the input image to generate a predicted point in an embedding space in accordance with values of the parameters of the model.

The training data includes multiple training images and respective label data for each of the training images. The label data for a given training image identifies one or more object categories from the set of object categories to which one or more objects depicted in the training image belong. That is, the label data associates the training image with one or more of the object categories.

The system determines label embeddings for the object categories in the set of object categories (step 204). Once the embeddings have been generated, the distance in the embedding space between the numeric embeddings of any two object categories reflects a degree of visual co-occurrence of the two object categories in the training images. In particular, the degree of visual co-occurrence is based on a relative frequency with which the same training image in the training data includes one or more objects that collectively belong to both of the two object categories, i.e., the relative frequency with which the label data for a training image associates both of the object categories with the training image.

To determine the label embeddings for the object categories, the system determines a respective pointwise mutual information measure between each possible pair of object categories in the set of object categories as measured in the training data. For example, for a given pair of object categories, the pointwise mutual information measure can be the logarithm of the ratio between (i) the probability that a training image includes one or more objects that collectively belong to both of the two object categories and (ii) the product of the probability that a training image includes one or more objects that belong to the first object category in the pair and the probability that a training image includes one or more objects that belong to the second object category in the pair.

The system then constructs a matrix of the pointwise mutual information measures. In particular, the system constructs the matrix such that for all *i* and *j*, the entry $(i,j)$ of the matrix is the pointwise mutual information measure between the category that is in position *i* in an order of the object categories and the category that is in position *j* in the order.

The system then performs an eigen-decomposition of the matrix of pointwise mutual information measures to determine an embedding matrix. For example, the system can decompose, e.g., via singular value decomposition, the matrix of pointwise mutual information measures *PMI* into a matrix product of matrices that satisfies:

$$PMI = U \cdot \Sigma \cdot U^t,$$

where $\Sigma$ is a diagonal matrix that has eigenvalues ranked from most significant to least significant along the diagonal. The embedding matrix E can then satisfy:

$$E = U \cdot \Sigma^{1/2}.$$

The system then determines the numeric embeddings from the rows of the embedding matrix. In particular, the system restricts the embedding matrix to its first $k$ columns to generate a restricted embedding matrix and then uses the rows of the restricted embedding matrix as the numeric embeddings, i.e., so that row $i$ of the restricted embedding matrix is the numeric embedding for the category that is in position $i$ in the order.

The system trains the machine learning model on the training data to determine trained values of the model parameters from initial values of the model parameters (step 206).

In particular, for each of the training images, the system processes the training image using the machine learning model in accordance with current values of the parameters of the machine learning model to generate a predicted point in the embedding space for the training image.

The system then determines an adjustment to the current values of the parameters that reduces the distance, e.g., according to cosine proximity, between the predicted point in the embedding space and the numeric embeddings of the object categories identified in the label data for the training image, e.g., using a gradient descent based machine learning training technique, e.g., RMSprop. When there is more than one object category identified in the label data for the training image, the system can determine a combined embedding from the numeric embeddings of the object categories identified in the label data for the training image and then adjust the current values of the parameters to reduce the cosine proximity between the combined embedding and the predicted point in the embedding space for the training image using the machine learning training technique. In some implementations, the system determines the combined embedding by summing the numeric embeddings of the object categories identified in the label data for the training image.

Once the system has trained the machine learning model, the system can use the numeric embeddings and the trained parameter values to classify new images using the trained model.

FIG. 3 is a flow diagram of an example process 300 for classifying a new image using a trained machine learning model.

For convenience, the process 300 will be described as being performed by a system of one or more computers located in one or more locations. For example, an image classification system, e.g., the image classification system 100 of FIG. 1, appropriately programmed in accordance with this specification, can perform the process 300.

The system maintains label embedding data (step 302). The label embedding data is data that maps each object category in the set of object categories to a respective numeric embedding of the object category in an embedding space. As described above, the distance in the embedding space, e.g., according to cosine proximity or another appropriate distance metric, between the numeric embeddings for any two object categories reflects a degree of visual co-occurrence of the two object categories in images, e.g., in images that were used to train the machine learning model. In particular, the numeric embeddings for two object categories that co-occur more frequently will generally be closer in the embedding space than the numeric embeddings for two object categories that co-occur relatively less frequently.

The system receives a new image to be classified (step 304).

The system processes the new image using the trained machine learning model to determine a predicted point in the embedding space (step 306). As described above, the machine learning model has been configured through training to receive the new image and to process the new image to generate the predicted point in accordance with trained values of the parameters of the model.

The system determines one or more numeric embeddings from the numeric embeddings for the object categories to the predicted point according to an appropriate distance metric, e.g., cosine proximity (step 308). In some implementations, the system determines a predetermined number of numeric embeddings that are closest to the predicted point in the embedding space. In some other implementations, the system identifies each numeric embedding that is closer than a threshold distance to the predicted point in the embedding space.

The system classifies the new image as including images of one or more objects that belong to the object categories represented by the one or more closest numeric embeddings (step 310). Once the new image has been classified, the system can provide data identifying the object categories for presentation to a user, e.g., ranked according to how close the corresponding embeddings were to the predicted point, store data identifying the object categories for later use, or provide the data identifying the object categories to an external system for use for some immediate purpose.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, .e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other examples are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method of training a machine learning model to classify images as including objects from one or more object categories (200), comprising:

    obtaining training data for training the machine learning model (202),

        wherein the machine learning model has a plurality of parameters and is configured to process input images to generate, for each input image, a predicted point in an embedding space, and
        wherein the training data comprises a plurality of training images and, for each training image, label data that identifies one or more object categories from a set of object categories to which one or more objects depicted in the training image belong;

determining, from the label data for the training images in the training data, a respective numeric embedding in the embedding space of each of the object categories in the set of object categories (204), wherein a distance in the embedding space between the numeric embeddings of any two object categories reflects a degree of visual co-occurrence of the two object categories in the training images, wherein the degree of visual co-occurrence is based on a relative frequency with which the label data for a training image associates both of the object categories with the training image; and

training the machine learning model on the training data (206), comprising, for each of the training images:

processing the training image using the machine learning model in accordance with current values of the parameters to generate a predicted point in the embedding space for the training image; and

adjusting the current values of the parameters to reduce a distance between the predicted point in the embedding space and the numeric embeddings of the object categories identified in the label data for the training image.

2. The method of claim 1, wherein determining the respective embedding of each of the object categories comprises:

determining a respective pointwise mutual information measure between each possible pair of object categories in the set of object categories as measured in the training data;

constructing a matrix of the pointwise mutual information measures;

performing an eigen-decomposition of the matrix of pointwise mutual information measures to determine an embedding matrix; and

determining the numeric embeddings from the rows of the embedding matrix.

3. The method of claim 2, wherein determining the numeric embeddings from the rows of the embedding matrix comprises:

restricting the embedding matrix to its first k columns to generate a restricted embedding matrix; and

using the rows of the restricted embedding matrix as the numeric embeddings.

4. The method any one of claims 2 or 3, wherein performing an eigen-decomposition of the matrix of pointwise mutual information measures to determine an embedding matrix comprises:

decomposing the matrix of pointwise mutual information measures *PMI* into a matrix product of matrices that satisfies:

$$PMI = U \cdot \Sigma \cdot U^t,$$

where $\Sigma$ has eigenvalues ranked from most significant to least significant in a main diagonal, wherein the embedding matrix *E* satisfies:

$$E = U \cdot \Sigma^{1/2}.$$

5. The method of any one of claims 1-4, wherein adjusting the current values of the parameters comprises:

determining a combined embedding from the numeric embeddings of the object categories identified in the label data for the training image; and

adjusting the current values of the parameters to reduce a cosine proximity between the combined embedding and the predicted point in the embedding space for the training image.

6. The method of claim 5, wherein determining the combined embedding comprises summing the numeric embeddings of the object categories identified in the label data for the training image.

7. The method of any one of claims 1-6, wherein the machine learning model is a deep convolutional neural network.

8. A method comprising:

maintaining data that maps each object category in a set of object categories to a respective numeric embedding of the object category in an embedding space (302), wherein a distance in the embedding space between the numeric embeddings for any two object categories reflects a degree of visual co-occurrence of the two object categories in a plurality of training images, wherein each training image is associated with label data that identifies one or more object categories from the set of object categories to which one or more objects depicted in the training image belong, and wherein the degree of visual co-occurrence is based on a relative frequency with which the label data for a training image associates both of the object categories with the training image;

receiving an input image (304);

processing the input image using a machine learning model, wherein the machine learning model has been trained to process the input image to generate a predicted point in the embedding space (306);

determining, from the maintained data, one or more numeric embeddings that are closest to the predicted point in the embedding space (308); and

classifying the input image as including images of one or more objects that belong to the object categories represented by the one or more numeric embeddings (310).

9. The method of claim 8, wherein the machine learning model is a deep convolutional neural network.

10. The method of any one of claims 8-9, wherein determining, from the maintained data, one or more numeric embeddings that are closest to the predicted point in the embedding space comprises:

determining a predetermined number of numeric embeddings that are closest to the predicted point in the embedding space.

11. The method of any one of claims 8-10, wherein determining, from the maintained data, one or more numeric embeddings that are closest to the predicted point in the embedding space comprises:

identifying each numeric embedding that is closer than a threshold distance to the predicted point in the embedding space.

12. The method of any one of claim 8-11, wherein determining, from the maintained data, one or more numeric embeddings that are closest to the predicted point in the embedding space comprises:

using cosine proximity to determine the one or more numeric embeddings that are closest to the predicted point.

13. A system comprising one or more computers and one or more storage devices storing instructions that are operable, when executed by the one or more computers, to cause the one or more computers to perform the operations of the respective method of any one of claims 1-12.

14. A computer storage medium encoded with instructions that, when executed by one or more computers, cause the one or more computers to perform the operations of the respective method of any one of claims 1-12.

**Patentansprüche**

1. Verfahren zum Trainieren eines Maschinenlernmodells zur Klassifizierung von Bildern als Objekte aus einer oder mehreren Objektkategorien beinhaltend (200), umfassend:

Erhalten von Trainingsdaten zum Trainieren des Maschinenlernmodells (202),

wobei das Maschinenlernmodell eine Vielzahl von Parametern aufweist und konfiguriert ist, Eingabebilder zu verarbeiten, um, für jedes Eingabebild, einen vorhergesagten Punkt in einem Einbettungsraum zu erzeugen, und

wobei die Trainingsdaten eine Vielzahl von Trainingsbildern und, für jedes Trainingsbild, Etikettendaten, die eine oder mehrere Objektkategorien aus einem Satz von Objektkategorien identifizieren, zu denen ein oder mehrere in den Trainingsdaten dargestellte Objekte gehören, umfassen;

Ermitteln, anhand der Etikettendaten für die Trainingsbilder in den Trainingsdaten, einer jeweiligen numerischen Einbettung in dem Einbettungsraum von jeder der Objektkategorien in dem Satz von Objektkategorien (204),

wobei ein Abstand in dem Einbettungsraum zwischen den numerischen Einbettungen zweier beliebiger Objektkategorien einen Grad des gleichzeitigen visuellen Auftretens der zwei Objektkategorien in den Trainingsbildern reflektiert, wobei der Grad des gleichzeitigen visuellen Auftretens auf einer relativen Frequenz, mit der die Etikettendaten für ein Trainingsbild beide der Objektkategorien mit den Trainingsbildern assoziieren, basiert; und

Trainieren des Maschinenlernmodells mit den Trainingsdaten (206), umfassend, für jedes der Trainingsbilder:

Verarbeiten des Trainingsbildes unter Nutzung des Maschinenlernmodells gemäß aktuellen Werten der Parameter, um einen vorhergesagten Punkt in dem Einbettungsraum für das Trainingsbild zu erzeugen; und

Einstellen der aktuellen Werte der Parameter, um einen Abstand zwischen dem vorhergesagten Punkt in dem Einbettungsraum und den numerischen Einbettungen der Objektkategorien, die in den Etikettendaten für das Trainingsbild identifiziert wurden, zu verringern.

2. Verfahren nach Anspruch 1, wobei das Ermitteln der jeweiligen Einbettung von jeder der Objektkategorien umfasst:

Ermitteln eines jeweiligen punktweisen gemeinsamen Informationsmaßes zwischen jedem möglichen Paar von Objektkategorien in dem Satz von Objektkategorien, wie in den Trainingsdaten gemessen;

Konstruieren einer Matrix aus punktweisen gemeinsamen Informationsmaßen;

Durchführen einer Eigenfunktionszerlegung der Matrix aus punktweisen gemeinsamen Informationsmaßen, um eine Einbettungsmatrix zu ermitteln; und

Ermitteln der numerischen Einbettungen anhand der Zeilen der Einbettungsmatrix.

3. Verfahren nach Anspruch 2, wobei das Ermitteln der numerischen Einbettungen anhand der Zeilen der Einbettungsmatrix umfasst:

Beschränken der Einbettungsmatrix auf ihre ersten $k$-Spalten, um eine beschränkte Einbettungsmatrix zu erzeugen; und

Verwenden der Zeilen der beschränkten Einbettungsmatrix als die numerischen Einbettungen.

4. Verfahren nach einem der Ansprüche 2 oder 3, wobei das Durchführen einer Eigenfunktionszerlegung der Matrix aus punktweisen gemeinsamen Informationsmaßen, um eine Einbettungsmatrix zu ermitteln, umfasst:

Zerlegen der Matrix aus punktweisen gemeinsamen Informationsmaßen $PMI$ in ein Matrixprodukt aus Matrizen, das Folgendes erfüllt:

$$PMI \ = \ U \cdot \Sigma \cdot U^t \ \textbf{,}$$

wobei $\Sigma$ Eigenwerte aufweist, die in einer Hauptdiagonale von am signifikantesten bis am wenigsten signifikant eingestuft sind, wobei die Einbettungsmatrix $E$ Folgendes erfüllt:

$$E \ = \ U \cdot \Sigma^{1/2} \textbf{.}$$

5. Verfahren nach einem der Ansprüche 1-4, wobei das Anpassen der aktuellen Werte der Parameter umfasst:

Ermitteln einer kombinierten Einbettung aus den in den Etikettendaten für das Trainingsbild identifizierten numerischen Einbettungen der Objektkategorien; und

Anpassen der aktuellen Werte der Parameter, um eine Cosinusnäherung zwischen der kombinierten Einbettung und dem vorhergesagten Punkt in dem Einbettungsraum für das Trainingsbild zu verringern.

6. Verfahren nach Anspruch 5, wobei das Ermitteln der kombinierten Einbettung ein Summieren der in den Etikettendaten für das Trainingsbild identifizierten numerischen Einbettungen der Objektkategorien umfasst.

7. Verfahren nach einem der Ansprüche 1-6, wobei das Maschinenlernmodell ein tiefes faltungsneuronales Netzwerk ist.

8. Verfahren, umfassend:

Verwalten von Daten, die jede Objektkategorie in einem Satz von Objektkategorien einer jeweiligen numerischen Einbettung der Objektkategorie in einem Einbettungs raum zuordnen (302), wobei ein Abstand in dem Einbettungsraum zwischen den numerischen Einbettungen für zwei beliebige Objektkategorien einen Grad des gleichzeitigen visuellen Auftretens der zwei Objektkategorien in einer Vielzahl von Trainingsbildern reflektiert, wobei jedes Trainingsbild mit Etikettendaten assoziiert ist, die eine oder mehrere Objektkategorien aus dem Satz von Objektkategorien identifizieren, zu denen ein oder mehrere im Trainingsbild dargestellt Objekte gehören, und wobei der Grad des gleichzeitigen visuellen Auftretens auf einer relativen Frequenz basiert, mit der die Etikettendaten für ein Trainingsbild beide der Objektkategorien mit dem Trainingsbild assoziieren;

Empfangen eines Eingabebildes (304);

Verarbeiten des Eingabebildes unter Nutzung eines Maschinenlernmodells, wobei das Maschinenlernmodell darauf trainiert wurde, das Eingabebild zu verarbeiten, um einen vorhergesagten Punkt in dem Einbettungsraum zu erzeugen (306);

Ermitteln, aus den verwalteten Daten, einer oder mehrerer numerischer Einbettungen, die dem vorhergesagten Punkt in dem Einbettungsraum am nächsten sind (308); und

Klassifizieren des Eingabebildes als beinhaltend Bilder von einem oder mehreren Objekten, die zu den durch die eine oder die mehreren numerischen Einbettungen dargestellten Objektkategorien gehören (310).

9. Verfahren nach Anspruch 8, wobei das Maschinenlernmodell ein tiefes faltungsneuronales Netzwerk ist.

10. Verfahren nach einem der Ansprüche 8-9, wobei das Ermitteln, anhand der verwalteten Daten, einer oder mehrerer numerischer Einbettungen, die dem vorhergesagten Punkt in dem Einbettungsraum am nächsten sind, umfasst:

Ermitteln einer vorbestimmten Anzahl an numerischen Einbettungen, die dem vorhergesagten Punkt in dem Einbettungsraum am nächsten sind.

11. Verfahren nach einem der Ansprüche 8-10, wobei das Ermitteln, anhand der verwalteten Daten, einer oder mehrerer numerischer Einbettungen, die dem vorhergesagten Punkt in dem Einbettungsraum am nächsten sind, umfasst:

Identifizieren jeder numerischen Einbettung, die näher an dem vorhergesagten Punkt in dem Einbettungsraum liegt als ein Schwellenabstand.

12. Verfahren nach einem der Ansprüche 8-11, wobei das Ermitteln, anhand der verwalteten Daten, einer oder mehrerer numerischer Einbettungen, die dem vorhergesagten Punkt in dem Einbettungsraum am nächsten sind, umfasst:

Verwenden einer Cosinusnäherung, um die eine oder die mehreren numerischen Einbettungen zu ermitteln, die dem vorhergesagten Punkt am nächsten sind.

13. System, das einen oder mehrere Computer und eine oder mehrere Speichergeräte, die Anweisungen speichern, die, bei Ausführung durch den einen oder die mehreren Computer, den einen oder die mehreren Computer veranlassen, die Operationen des jeweiligen Verfahrens nach einem der Ansprüche 1-12 durchzuführen, umfasst.

14. Computerspeichermedium, das mit Anweisungen codiert ist, die, bei Ausführung durch einen oder mehrere Computer, den einen oder die mehreren Computer veranlassen, die Operationen des jeweiligen Verfahrens nach einem der Ansprüche 1-12 durchzuführen.

## Revendications

1. Procédé de formation d'un modèle d'apprentissage automatique pour classer des images comme inclusion d'objets à partir d'une ou de plusieurs catégories d'objets (200), comprenant :

l'obtention de données de formation pour la formation du modèle d'apprentissage automatique (202),

dans lequel le modèle d'apprentissage automatique a une pluralité de paramètres et est configuré pour traiter des images d'entrée afin de générer, pour chaque image d'entrée, un point prévu dans un espace d'inclusion, et

dans lequel les données de formation comprennent une pluralité d'images de formation et, pour chaque image de formation, des données d'étiquette qui identifient une ou plusieurs catégories d'objets à partir d'un ensemble de catégories d'objets auxquelles un ou plusieurs objets représentés dans l'image de formation appartiennent ;

la détermination, à partir des données d'étiquette pour les images de formation dans les données de formation, d'une inclusion numérique respective dans l'espace d'inclusion de chacune des catégories d'objet dans l'ensemble de catégories d'objet (204),

dans lequel une distance dans l'espace d'inclusion entre les inclusions numériques de l'une quelconque des deux catégories d'objets reflète un degré de co-occurrence visuelle des deux catégories d'objet dans les images de formation, dans lequel le degré de co-occurrence visuelle est sur base d'une fréquence relative avec laquelle les données d'étiquettes pour une image de formation associent les deux catégories d'objet avec l'image de formation ; et

la formation du modèle d'apprentissage automatique sur les données de formation (206), comprenant, pour chacune des images de formation :

le traitement de l'image de formation à l'aide du modèle d'apprentissage automatique conformément aux valeurs actuelles des paramètres afin de générer un point prévu dans l'espace d'inclusion pour l'image de formation ; et

l'ajustement des valeurs actuelles des paramètres pour réduire une distance entre le point prévu dans l'espace d'inclusion et les inclusions numériques des catégories d'objet identifiées dans les données d'étiquettes pour l'image de formation.

2. Procédé selon la revendication 1, dans lequel la détermination de l'inclusion respective de chacune des catégories d'objet comprend

la détermination d'une mesure d'information mutuelle point par point respective entre chaque paire possible de catégories d'objets dans l'ensemble de catégories d'objets telle que mesurée dans les données de formation ;
la construction d'une matrice des mesures d'informations mutuelles point par point ;
la réalisation d'une décomposition propre de la matrice de mesures d'informations mutuelles point par point pour déterminer une matrice d'inclusion ; et

la détermination des inclusions numériques à partir des rangées de la matrice d'inclusion.

3. Procédé selon la revendication 2, dans lequel la détermination des inclusions numériques à partir des rangées de la matrice d'inclusion comprend :

la limitation de la matrice d'inclusion à ses premières colonnes k pour générer une matrice d'inclusion limitée ; et
l'utilisation des rangées de la matrice d'inclusion limitée comme les inclusions numériques.

4. Procédé selon l'une quelconque des revendications 2 ou 3, dans lequel l'exécution d'une décomposition propre de la matrice de mesures d'informations mutuelles point par point pour déterminer une matrice d'inclusion comprend :
la décomposition de la matrice de mesures d'informations mutuelles point par point *PMI* dans un produit matriciel de matrices qui satisfait à :

$$PMI \ = \ U \cdot \ \Sigma \cdot \ U^{t},$$

où $\Sigma$ a des valeurs propres classées de la plus significative à la moins significative dans une diagonale principale, dans lequel la matrice d'inclusion *E* satisfait à :

$$E \ = \ U \cdot \Sigma^{1/2}.$$

5. Procédé selon l'une quelconque des revendications 1-4, dans lequel l'ajustement des valeurs actuelles des paramètres comprend :

la détermination d'une inclusion combinée à partir des inclusions numériques des catégories d'objet identifiées dans les données d'étiquettes de l'image de formation ; et
l'ajustement des valeurs actuelles des paramètres pour réduire une proximité de cosinus entre l'inclusion combinée et le point prévu dans l'espace d'inclusion pour l'image de formation.

6. Procédé selon la revendication 5, dans lequel la détermination de l'inclusion combinée comprend la somme des inclusions numériques des catégories d'objet identifiées dans les données d'étiquettes pour l'image de formation.

7. Procédé selon l'une quelconque des revendications 1-6, dans lequel le modèle d'apprentissage automatique est un réseau neuronal convolutionnel profond.

8. Procédé comprenant :

la conservation des données qui mappe chaque catégorie d'objet dans un ensemble de catégories d'objets à une inclusion numérique respective de la catégorie d'objet dans un espace d'inclusion (302), dans lequel une distance dans l'espace d'inclusion entre les inclusions numériques pour l'une quelconque des deux catégories d'objet reflète un degré de co-occurrence visuelle des deux catégories d'objet dans une pluralité d'images de formation, dans lequel chaque image de formation est associée à des données d'étiquette qui identifient une ou plusieurs catégories d'objets à partir de l'ensemble de catégories d'objets auquel un ou plusieurs objets représentés dans la formation d'image appartiennent, et dans lequel le degré de co-occurrence visuelle est sur base d'une fréquence relative avec laquelle les données d'étiquette pour une image de formation associent les deux catégories d'objet avec l'image de formation ;
la réception d'une image d'entrée (304) ;
le traitement de l'image d'entrée à l'aide d'un modèle d'apprentissage automatique, dans lequel le modèle d'apprentissage automatique a été formé pour traiter l'image d'entrée afin de générer un point prévu dans l'espace d'inclusion (306) ;
la détermination, à partir des données conservées, d'une ou plusieurs inclusions numériques qui sont les plus proches du point prévu dans l'espace d'inclusion (308) ; et
la classification de l'image d'entrée comme comprenant des images d'un ou plusieurs objets appartenant aux catégories d'objet représentées par la ou les inclusions numériques (310).

9. Procédé selon la revendication 8, dans lequel le modèle d'apprentissage automatique est un réseau neuronal convolutionnel profond.

10. Procédé selon l'une quelconque des revendications 8-9, dans lequel la détermination, à partir des données conservées, d'une ou plusieurs inclusions numériques qui sont les plus proches du point prévu dans l'espace d'inclusion comprend :
la détermination d'un nombre prédéterminé d'inclusions numériques qui sont les plus proches du point prévu dans l'espace d'inclusion.

11. Procédé selon l'une quelconque des revendications 8-10, dans lequel la détermination, à partir des données conservées, d'une ou plusieurs inclusions numériques qui sont les plus proches du point prévu dans l'espace d'inclusion comprend :
l'identification de chaque inclusion numérique qui est plus proche qu'une distance seuil du point prévu dans l'espace d'inclusion.

**12.** Procédé selon l'une quelconque des revendications 8-11, dans lequel la détermination, à partir des données conservées, d'une ou plusieurs inclusions numériques qui sont les plus proches du point prévu dans l'espace d'inclusion comprend :
l'utilisation d'une proximité de cosinus pour déterminer la ou les inclusions numériques qui sont les plus proches du point prévu.

**13.** Système comprenant un ou plusieurs ordinateurs et un ou plusieurs dispositifs de stockage pour le stockage d'instructions qui sont utilisables, lorsqu'elles sont exécutées par le ou les ordinateurs, pour amener le ou les ordinateurs à exécuter les opérations du procédé respectif selon l'une quelconque des revendications 1-12.

**14.** Support de stockage lisible par ordinateur encodé avec des instructions qui, lorsqu'elles sont exécutées par un ou plusieurs ordinateurs, amènent le ou les ordinateurs à exécuter les opérations du procédé respectif selon l'une quelconque des revendications 1-12.

FIG. 1

EP 3 485 396 B1

200

Receive training data

202

Determine label embeddings

204

Train machine learning model on training data

206

FIG. 2

300

Maintain label data

302

Receive new image

304

Process new image to determine predicted point

306

Determine closest numeric embedding(s)

308

Classify new image

310

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016100717 A1

- US 20150178383 A